Europäisches Patentamt

European Patent Office

Office européen des brevets

(11) Publication number: **0 332 725 B1**

# EUROPEAN PATENT SPECIFICATION

(45) Date of publication of patent specification: **30.09.92**  (51) Int. Cl.5: **B65D 53/04**, B29C 67/18

(21) Application number: **88104123.0**

(22) Date of filing: **15.03.88**

(54) **Low oxygen barrier type plastic closure with an adhered gasketing compound and method of forming same.**

(43) Date of publication of application:
**20.09.89 Bulletin 89/38**

(45) Publication of the grant of the patent:
**30.09.92 Bulletin 92/40**

(84) Designated Contracting States:
**BE DE ES FR GB IT NL**

(56) References cited:
**DE-A- 3 539 088**
**US-A- 3 928 109**
**US-A- 4 436 478**

(73) Proprietor: **CONTINENTAL WHITE CAP, INC.
Tri State Center 2215 Sanders Road
Northbrook Illinois 60062(US)**

(72) Inventor: **Kehe, Alfred W.
1517 Atwood Avenue
Berkeley Illinois 60163(US)**
Inventor: **Banich, John N.
3401 West 76th Place
Chicago Illinois 60652(US)**

(74) Representative: **Baillie, Iain Cameron et al
c/o Ladas & Parry, Altheimer Eck 2
W-8000 München 2(DE)**

Rank Xerox (UK) Business Services

## Description

This invention relates in general to new and useful improvements in closures for a bottle or the like, and more particularly to a plastic/metal composite closure which includes a plastic closure molded and adhered simultaneously to a coated foil insert to which a conventional plastisol gasketing compound may be adhered to provide a hermetic container seal.

The primary object of this invention is to provide a lidded, lugged or threaded type composite closure for vacuum or pressure type products requiring very low orders of gas and/or liquid permeation with a functional hermetic seal.

Another object of this invention is to provide a foil lined plastic closure which will maintain a hermetic seal under pasteurization, hot fill and retort conditions.

Still another object of the invention is to provide a barrier metal foil closure panel insert which will simultaneously adhere to a polyolefin closure during the actual gasketing compound spun-lined and fused within the closure.

Most particularly, there is a need in the plastic closure art for a plastic closure with functional performance characteristics in regard to very low orders of gas permeation, gasket sealant adhesion, and cut-through resistance under hot fill and retort conditions. Additionally, the closure should provide long term shelf life to the packaged product.

With the above and other objects in view that will hereinafter appear, the nature of the invention will be more clearly understood by reference to the following detailed description, the appended claims, and the several views illustrated in the accompanying drawing.

Figure 1 is a schematic view showing the method of forming a barrier metal foil closure panel insert in accordance with this invention.

Figure 2 is an enlarged fragmentary elevational view of the insert showing the general details thereof.

Figure 3 is an exploded perspective view with parts in section of a mold for injection molding a plastic closure about the insert.

Figure 4 is an elevational view with parts in section of the closed mold of Figure 3 and shows a plastic closure being injection molded.

Figure 5 is an elevational view with parts broken away and shown in section of an apparatus for spin-lining the composite closure with a plastisol gasketing compound.

Figure 6 is a schematic elevational view with parts broken away and shown in section of the plastisol gasketing material being fused.

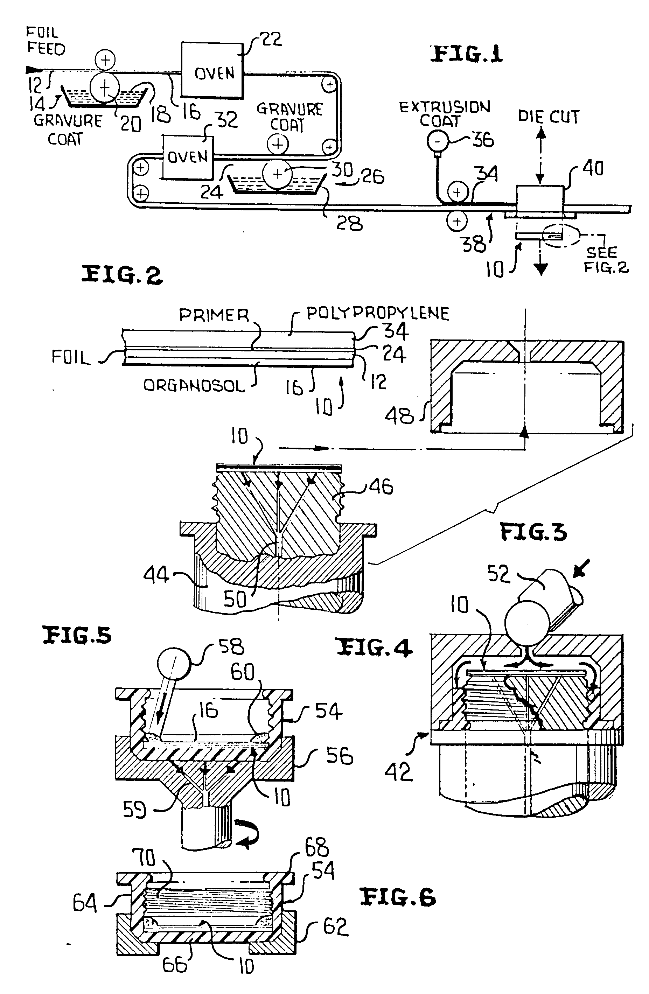

Referring now to the drawings in detail, reference is first made to Figure 1 wherein there is illustrated the method of forming the barrier metal foil closure panel insert, which insert is generally identified by the numeral 10. In accordance with this invention, there is provided a metal foil web 12 which is preferably in the form of a dead soft aluminum foil having a thickness on the order of 0.0381 mm. (1.5 mil).

The web 12 is conveyed through a direct gravure coating apparatus, generally identified by the numeral 14, wherein a coating 16 is applied to one face or surface of the web 12. In accordance with this invention, the coating 16 is preferably applied as a solvent based 50% solids phenolic/vinyl chloride terpolymer organosol identified by the numeral 18 with the gravure coating apparatus using a 65 line gravure cylinder 20.

The coated web is then passed through an oven 22 which is maintained at an air temperature on the order of 232°C. with the oven dwell time being on the order of 27 seconds. The weight of the dried coating 16 is on the order of 7.38 lbs./ream or 1.19 mg/cm$^2$. (7.7mg/in.$^2$).

The other face or surface of the web 12 is provided with a coating 24 utilizing a direct gravure coating apparatus generally identified by the numeral 26. The coating apparatus 26 applies a solvent based 12% solids polyolefin carboxylic acid copolymer primer dispersion 28 which may include polyethylene or polypropylene copolymers and homopolymers to form the coating 24. The coating apparatus 26 includes a 65 line gravure cylinder 30. The coated web 12 is then passed through an oven 32 having an air temperature on the order of 232°C. (450°F.) with an oven dwell time on the order of 20 seconds. The resultant dried coating 24 has a film weight on the order of 1.60 lbs./ream or 0.26 mg/cm$^2$. (1.68 mg/in.$^2$).

Next, there is applied to the coating 24 a layer 34 of a thermoplastic polyolefin, preferably polypropylene homopolymer. The layer 34 has a thickness on the order of 0.0762 mm. (3 mil) and is either applied as an extrusion coat utilizing an extruder 36 as shown in Figure 1, or the layer 34 may be applied as a film to the coating 24 by conventional hot roll hip lamination at about 190°C.

The resultant composite web material, generally identified by the numeral 38, then passes into a die cutting apparatus 40 which die cuts from the composite web 38 the inserts 10.

Referring now to Figure 2 in particular, it will be seen that in cross section, a typical insert 10 includes a central aluminum foil layer.

Each insert 10 is placed in an injection mold for a closure, the injection mold being generally identified by the numeral schematically illustrated and includes a base 44 having an upwardly extending core 46 and a top mold member 48. The core 46 projects above the base and the insert 10 is seated thereon and held in place by a vacuum drawn through passages 50.

The core is particularly adapted to define internal threads on a resultant closure although the mold 42 may be constructed so as to provide the closure with lugs or other suitable retaining means.

After the mold 42 has been assembled with the insert 10 in place, the mold 42 is presented to an injection nozzle 52 through which a polyolefin e.g. polypropylene is injected into the mold cavity to form a polpropylene closure member generally identified by the numeral 54. It will be seen that in the injection molding of the closure member 54, not only is the insert 10 mechanically interlocked with the closure member 54, but also the polypropylene homopolymer layer 34 is heat bonded to the newly injected polypropylene. In this manner, the insert 10 becomes a fixed and bonded part of the closure 54 leaving exposed the organosol surface 16.

After the closure 54 has been formed in the injection mold 42, the closure is mounted in a fixture 56 which is part of a spin-lining apparatus including a suitable dispensing gun 58.

The fixture 56 is preferably provided with vacuum passages 59 to retain the closure 54 in place during the spin application of a plastisol gasket 60. The gasket 60 may either be an annular gasket or an overall gasket and has a thickness in the range of 0.889 mm. to 1.524 mm. (.035 to .060 inch).

The coated closure 54 is then subjected to a convection and/or induction or a dielectric heating apparatus to effect a fusion of the gasket 60 and the bonding thereof to the organosol coating 16. Such a heating fixture is schematically shown in Figure 6 and identified by the numeral 62.

It will be seen that the resultant closure member 54 includes a body 64 having an integral end panel 66 and generally a base lip 68. The insert 10 has the layer 34 thereof bonded to the end panel 66 and is further interlocked with the body 64 of the closure 54. The body 64, as illustrated, is provided with internal securing threads 70 although the body may be provided with other types of securing means, including lugs and the like.

**Claims**

1. A barrier metal foil closure panel insert (10) for a plastic closure, said insert comprising a layer of metal foil (12), a primer coating (24) on one face of said metal foil layer, a plastic bonding layer (34) bonded to said primer coating, and an organosol coating (16) on an opposite face of said metal foil layer.

2. An insert according to claim 1, wherein said bonding layer is a thermoplastic polyolefin having a thickness on the order of 0.0762 mm (3 mil).

3. An insert in accordance with claim 1, wherein said metal foil layer (12) is a dead soft aluminum foil.

4. An insert in accordance with claim 3, wherein said metal foil layer (12) has a thickness on the order of 0.0381 mm (1.5 mil).

5. An insert in accordance with claim 1, wherein said primer (24) is one to which a thermoplastic polyolefin will directly bond.

6. An insert in accordance with claim 1, wherein said primer (24) is a solvent based 12% solids polypropylene carboxylic acid copolymer dispersion.

7. An insert in accordance with claim 6, wherein said plastic bonding layer (34) is formed of polypropylene.

8. An insert in accordance with claim 6, wherein said primer (24) is a gravure coated solvent.

9. An insert in accordance with claim 1, wherein said organosol (16) is a solvent based 50% solids phenolic/vinyl chloride terpolymer organosol.

10. An insert in accordance with claim 9, wherein said organosol (16) can be heat bonded to a plastisol gasketing compound.

11. An insert in accordance with claim 9, wherein said organosol is a gravure coated solvent.

12. An insert in accordance with claim 6, wherein said primer (24) has a film weight on the order of 0.26 mg/cm$^2$ (1.68 mg/in$^2$).

13. An insert in accordance with claim 9, wherein said organosol (16) has a film weight on the order of 1.19 mg/cm$^2$ (7.7 mg/in$^2$).

14. A method of forming a closure panel insert (10) for a plastic closure, said method comprising the steps of providing a metal foil layer (12), applying to one face of said metal foil layer an organosol coating (16) and to an opposite face of said metal foil layer a primer (24), applying and bonding to said primer coating a layer of thermoplastic polyolefin (34), and then cutting from said coated web individual inserts.

15. A method according to claim 14, wherein each of said coatings is applied as a solvent based material utilizing a gravure cylinder (20, 30).

16. A method according to claim 15, followed by passing through an oven (32) to dry the coatings.

17. A method according to claim 15, wherein said coatings are applied in sequence with each coating step being followed by passing the coated web through an oven (32).

18. A method according to claim 14, wherein each insert (10) is placed in an injection mold (42), and a plastic closure (54) having an end panel (66) is injection molded around said insert (10) with said layer of thermoplastic polyolefin (34) directly bonding to said closure end panel (66).

19. A method according to claim 18, wherein the plastic closure (54) with the insert (10) therein has a plastisol gasket (60) applied to the organosol coating (16).

20. A closure assembly comprising an injection molded polypropylene closure member (54) including a body (64) and an end panel (66), an insert (10) for forming a seal with a container seated in said body, said insert (10) being a laminate including a metal foil barrier layer (12) and being directly heat bonded to said end panel (66), and a plastisol gasket (60) carried by said insert remote from said end panel.

21. A closure assembly according to claim 20, wherein said body (64) is molded about a peripheral edge of said insert (10).

**Patentansprüche**

1. Aus einer Metallfolie bestehender, sperrschichtbildender Einsatz (10) für einen Kunststoffverschluß mit einer aus einer Metallfolie (12) bestehenden Schicht, einem Haftgrund (24) auf einer Fläche der aus der Metallfolie bestehenden Schicht, einer mit dem Haftgrund stoffschlüssig verbundenen Schicht (34) aus einem Kunststoffbindemittel und einem Organosolüberzug (16) auf der entgegengesetzten Fläche der aus der Metallfolie bestehenden Schicht.

2. Einsatz nach Anspruch 1, dadurch gekennzeichnet, daß die Rindemittelschicht aus einem thermoplastischen Polyolefin mit einer Dicke in einer Größenordnung von 0,0762 mm besteht.

3. Einsatz nach Anspruch 1, dadurch gekennzeichnet, daß die aus der Metallfolie bestehende Schicht (12) aus einer Folie aus totweichem Aluminium besteht.

4. Einsatz nach Anspruch 3, dadurch gekennzeichnet, daß die aus einer Metallfolie bestehende Schicht (12) eine Dicke in einer Größenordnung von 0,0381 mm hat.

5. Einsatz nach Anspruch 1, dadurch gekennzeichnet, daß der Haftgrund (24) ein solcher ist, mit dem ein thermoplastisches Polyolefin direkt stoffschlüssig verbindbar ist.

6. Einsatz nach Anspruch 1, dadurch gekennzeichnet, daß der Haftgrund (24) eine Lösungsmittel und 12% Feststoff enthaltende Dispersion eines Polypropylen-Carbonsäure-Copolymers ist.

7. Einsatz nach Anspruch 6, dadurch gekennzeichnet, daß die Kunststoffbindemittelschicht (34) aus Polypropylen besteht.

8. Einsatz nach Anspruch 6, dadurch gekennzeichnet, daß der Haftgrund (24) ein im Tiefdruck aufgetragenes Lösungsmittel ist.

9. Einsatz nach Anspruch 1, dadurch gekennzeichnet, daß das Organosol (16) ein Lösungsmittel und 50% Feststoff enthaltendes Organosol eines Phenolharz/Vinylchlorid-Terpolymers ist.

10. Einsatz nach Anspruch 9, dadurch gekennzeichnet, daß das Organosol (16) in der Wärme mit einer Plastisoldichtmasse stoffschlüssig verbindbar ist.

11. Einsatz nach Anspruch 9, dadurch gekennzeichnet, daß das Organosol ein im Tiefdruck aufgetragenes Lösungsmittel ist.

12. Einsatz nach Anspruch 6, dadurch gekennzeichnet, daß der Haftgrund (24) ein Flächengewicht in der Grüßenordnung von 0,26 $mg/cm^2$ hat.

13. Einsatz nach Anspruch 9, dadurch gekennzeichnet, daß das Organisol (16) ein Flächengewicht in der Größenordnung von 1,19 $mg/cm^3$ hat.

14. Verfahren zum Herstellen eines Verschlußplatteneinsatzes (10) für einen Kunststoffverschluß mit folgenden Schritten: es wird eine aus einer Metallfolie bestehende Schicht (12) verwendet, eine Fläche der aus der Metallfolie bestehenden Schicht wird mit einem Organosol (16) überzogen, die entgegengesetzte Fläche der aus der Metallfolie bestehenden Schicht wird mit einem Haftgrund (24) überzogen, auf den Haftgrund wird eine Schicht aus einem thermoplastischen Polyolefin (34) aufgetragen und mit dem Haftgrund stoffschlüssig verbunden, und dann werden von der so überzogenen Materialbahn einzelne Einsätze abgeschnitten.

15. Verfahren nach Anspruch 14, dadurch gekennzeichnet, daß jeder der genannten Überzüge in Form eines Materials auf Lösungsmittelbasis mit einem Tiefdruckzylinder (20, 30) aufgetragen wird.

16. Verfahren nach Anspruch 15, dadurch gekennzeichnet, daß die Überzüge beim Durchwandern eines Ofens (32) getrocknet werden.

17. Verfahren nach Anspruch 15, dadurch gekennzeichnet, daß die Überzüge nacheinander aufgetragen werden und nach jedem Auftrageschritt die überzogene Bahn durch einen Ofen (32) geführt wird.

18. Verfahren nach Anspruch 14, dadurch gekennzeichnet, daß jeder Einsatz (10) in ein Spritzgießwerkzeug (42) gelegt und um den Einsatz (10) herum ein eine Endplatte (66) besitzender Kunststoffverschluß (10) im Spritzguß derart hergestellt wird, daß die Schicht aus dem thermoplastischen Polyolefin (34) mit der Endplatte (66) des Verschlusses direkt stoffschlüssig verbunden wird.

19. Verfahren nach Anspruch 18, dadurch gekennzeichnet, daß auf den Organosolüberzug (16) des den Einsatz (10) enthaltenden Kunststoffverschlusses (54) eine Plastisoldichtung (60) aufgetragen wird.

20. Verschlußanordnung mit einem im Spritzguß hergestellten Verschlußteil (54), der aus Polypropylen besteht und einen Körper (64) und eine Endplatte (66) besitzt, ferner mit einem zur dichten Anlage an einem in dem Körper sitzenden Behälter dienenden Einsatz (10), der aus einem Schichtstoff besteht, der eine aus einer Metallfolie bestehende Sperrschicht besitzt und der in der Wärme direkt mit der Endplatte (66) stoffschlüssig verbunden worden ist, und mit einer Plastisoldichtung (60), die der Einsatz im Abstand von der Endplatte trägt.

21. Verschlußanordnung nach Anspruch 20, dadurch gekennzeichnet, daß der Körper (64) um einen Umfangsrand des Einsatzes (10) herum geformt ist.

**Revendications**

1. Pièce d'insertion de panneau de fermeture à feuille métallique formant barrière (10) pour fermeture plastique, ladite pièce d'insertion comprenant une couche de feuille métallique (12), un revêtement de couche de fond (24) sur un côté de ladite couche de feuille métallique, une couche plastique de liaison (34) fixée audit revêtement de couche de fond et un revêtement d'organosol (16) sur le côté opposé de ladite couche de feuille métallique.

2. Pièce d'insertion selon la revendication 1, dans laquelle ladite couche de liaison est une polyoléfine thermoplastique ayant une épaisseur de l'ordre de 0,0762 mm (3 mil).

3. Pièce d'insertion selon la revendication 1, dans laquelle ladite couche de feuille métallique (12) est une feuille d'aluminium extra-doux.

4. Pièce d'insertion selon la revendication 3, dans laquelle ladite couche de feuille métallique (12) a une épaisseur de l'ordre de 0,0381 mm (1,5 mil).

5. Pièce d'insertion selon la revendication 1, dans laquelle ladite couche de fond (24) est une couche de fond à laquelle une polyoléfine thermoplastique se fixe directement.

6. Pièce d'insertion selon la revendication 1, dans laquelle ladite couche de fond (24) est une dispersion, à base de solvant, de copolymère polypropylène-acide carboxylique à 12 % de solides.

7. Pièce d'insertion selon la revendication 6, dans laquelle ladite couche plastique de liaison (34) est constituée par du polypropylène.

8. Pièce d'insertion selon la revendication 6, dans laquelle ladite couche de fond (24) est un solvant appliqué par gravure.

9. Pièce d'insertion selon la revendication 1, dans laquelle ledit organosol (16) est un organosol, à base de solvant, de terpolymère phénolique/chlorure de vinyle à 50 % de solides.

10. Pièce d'insertion selon la revendication 9, dans laquelle ledit organosol (16) peut être fixé thermiquement à un composé d'étanchéité à base de plastisol.

**11.** Pièce d'insertion selon la revendication 9, dans laquelle ledit organosol est un solvant appliqué par gravure.

**12.** Pièce d'insertion selon la revendication 6, dans laquelle ladite couche de fond (24) a un poids de film de l'ordre de 0,26 mg/cm$^2$ (1,68 mg/pouce$^2$).

**13.** Pièce d'insertion selon la revendication 9, dans laquelle ledit organosol (16) a un poids de film de l'ordre de 1,19 mg/cm$^2$ (7,7mg/pouce$^2$).

**14.** Procédé de formation d'une pièce d'insertion de panneau de fermeture (10) pour fermeture plastique, qui comprend les étapes de fourniture d'une couche de feuille métallique (12), d'application à un côté de ladite couche de feuille métallique d'un revêtement d'organosol (16) et au côté opposé de ladite couche de feuille métallique d'une couche de fond (24), d'application et de fixation audit revêtement de couche de fond d'une couche de polyoléfine thermoplastique (34) puis de découpage de pièces d'insertion individuelles dans ladite bande revêtue.

**15.** Procédé selon la revendication 14, dans lequel chacun desdits revêtements est appliqué sous forme d'un matériau à base de solvant au moyen d'un cylindre de gravure (20,30).

**16.** Procédé selon la revendication 15, suivi par le passage dans un four (32) pour sécher les revêtements.

**17.** Procédé selon la revendication 15, dans lequel lesdits revêtements sont appliqués successivement, chaque étape de revêtement étant suivie par le passage de la bande revêtue dans un four (32).

**18.** Procédé selon la revendication 14, dans lequel chaque pièce d'insertion (10) est placée dans un moule pour injection (42), et une fermeture plastique(54) comportant un panneau extrême (66) est moulée par injection autour de ladite pièce d'insertion (10), ladite couche de polyoléfine thermoplastique (34) se fixant directement audit panneau extrême (66) de la fermeture.

**19.** Procédé selon la revendication 18, dans lequel un joint d'étanchéité (60) en plastisol est appliqué au revêtement d'organosol (16) de la fermeture plastique (54) contenant la pièce d'insertion (10).

**20.** Assemblage de fermeture comprenant un élément de fermeture (54) en polypropylène moulé par injection comportant un corps (64) et un panneau extrême (66), une pièce d'insertion (10) destinée à former une fermeture étanche avec un récipient disposé dans ledit corps, ladite pièce d'insertion (10) étant un stratifié comprenant une couche formant barrière (12) en feuille métallique et étant directement fixé thermiquement audit panneau extrême (66), et un joint d'étanchéité (60) en plastisol porté par ladite pièce d'insertion à distance dudit panneau extrême.

**21.** Assemblage de fermeture selon la revendication 20, dans lequel ledit corps (64) est moulé autour du bord périphérique de ladite pièce d'insertion (10).

FIG.1

FOIL FEED

OVEN 22

GRAVURE COAT

GRAVURE COAT

12 14 20 18 16 32 24 30 26 28

OVEN

EXTRUSION COAT 36

DIE CUT

34 40 38 10

SEE FIG.2

FIG.2

PRIMER POLYPROPYLENE

FOIL

ORGANOSOL

34 24 16 10 12 48

10 46 44 50

FIG.3

FIG.5

58 60 16 54 56 59 10

FIG.4

52 10 42

70 68 54 64 62 66 10

FIG.6

7